# EUROPEAN PATENT APPLICATION

(11) **EP 4 556 524 A1**
(43) Date of publication of application: **21.05.2025**
(21) Application number: 23839495.1
(22) Date of filing: 30.06.2023
(51) Int. Cl.: C08L 67/00, C08G 63/02, C08G 63/06, C08K 5/098, C08K 7/14, C08L 23/06, C08L 67/04

(54) **LIQUID CRYSTAL POLYESTER COMPOSITION AND MOLDED BODY**

(30) Priority: 13.07.2022 JP 2022112311
(71) Applicant: Sumitomo Chemical Company, Limited, Tokyo 103-6020 (JP)
(72) Inventor: SUGIYAMA, Takayuki, Tsukuba-shi, Ibaraki 300-3294 (JP); TAMURA, Tasuku, Chiba-shi, Chiba 260-0822 (JP)
(74) Representative: Vossius & Partner Patentanwälte Rechtsanwälte mbB
(86) International application number: PCT/JP2023/024479
(87) International publication number: WO 2024/014323

(57) **Abstract**

The present invention employs a liquid crystal polyester composition containing a liquid crystal polyester and a specific high-molecular-weight polyethylene. The present invention is characterized in that the high-molecular-weight polyethylene has a limiting viscosity of 10 dL/g or more and 18 dL/g or less and a volume median diameter (d50) of 65 µm or less, and a content of the high-molecular-weight polyethylene is 0.1 parts by mass or more and 1.2 parts by mass or less per 100 parts by mass of the liquid crystal polyester.

## Description

### Technical Field

The present invention relates to a liquid crystal polyester composition and a molded body.

The present application claims priority based on Japanese Patent Application No. 2022-112311 filed in Japan on July 13, 2022, the content of which is incorporated herein by reference in its entirety.

### Background Art

A liquid crystal polyester has high heat resistance and high strength and excellent melt flowability and is therefore used as a molding material for producing various products and parts such as electric and electronic parts. Particularly, by taking advantage of excellent melt flowability, a liquid crystal polyester is preferably used as a molding material for producing a molded body having a thin-walled portion or a molded body having a complicated shape.

For example, Patent Literature 1 discloses a liquid crystal polyester resin mixture obtained by mixing a liquid crystal polyester, a filler, and a high-molecular-weight polyethylene.

### Citation List

### Patent Literature

Patent Literature 1: Japanese Patent Laid-Open No. 2003-12898

### Summary of Invention

### Problems to be Solved by Invention

Meanwhile, electric and electronic parts and mechanical parts have increasingly been reduced in wall thickness and have become to have more complicated shapes due to recent advancement in performance or output power or reduction in size or weight of devices.

When a thin-walled or complicated molded body is produced, such a molded body may be poor in mold releasability that indicates the ease of removing a molded body from a mold. In this case, when the molded body is removed from a mold, the number of man-hours may increase or the molded body may be deformed or broken. In Patent Literature 1, there is no consideration of mold releasability.

In light of such circumstances, it is an object of the present invention to provide a liquid crystal polyester composition having higher mold releasability that indicates the ease of removing a molded body from a mold and a molded body comprising such a liquid crystal polyester composition.

### Means to Solve the Problems

In order to achieve the above object, the present invention includes the following aspects.
[1] A liquid crystal polyester composition comprising a liquid crystal polyester and a high-molecular-weight polyethylene, wherein the high-molecular-weight polyethylene has a limiting viscosity of 10 dL/g or more and 18 dL/g or less, the high-molecular-weight polyethylene has a volume median diameter (d50) of 65 µm or less, and a content of the high-molecular-weight polyethylene is 0.1 parts by mass or more and 1.2 parts by mass or less per 100 parts by mass of the liquid crystal polyester.
[2] The liquid crystal polyester composition according to [1], further comprising a fibrous filler.
[3] The liquid crystal polyester composition according to [2], wherein the fibrous filler is glass fiber.
[4] The liquid crystal polyester composition according to [2] or [3], wherein a content of the fibrous filler is 20 parts by mass or more and 250 parts by mass or less per 100 parts by mass of the liquid crystal polyester.
[5] The liquid crystal polyester composition according to any one of [1] to [4], further comprising a metal salt of a fatty acid.
[6] The liquid crystal polyester composition according to [5], wherein the metal salt of a fatty acid is a metal salt of a fatty acid having 12 or more carbon atoms.
[7] The liquid crystal polyester composition according to any one of [1] to [6], wherein the liquid crystal polyester has a repeating unit represented by the following formula (1):

   (1) -O-Ar¹-CO-

   wherein Ar¹ represents a phenylene group, a naphthylene group, or a biphenylylene group; and
   a hydrogen group in the group represented by Ar¹ is optionally replaced with a halogen atom, an alkyl group, or an aryl group.
[8] The liquid crystal polyester composition according to [7], wherein the liquid crystal polyester has a repeating unit represented by the following formula (1), a repeating unit represented by the following formula (2), and a repeating unit represented by the following formula (3):

   (1) -O-Ar¹-CO-

   (2) -CO-Ar²-CO-

   (3) -X-Ar³-Y-

   wherein Ar¹ represents a phenylene group, a naphthylene group, or a biphenylylene group,
   Ar² and Ar³ each independently represent a phenylene group, a naphthylene group, a biphenylylene group, or a group represented by the following formula (4),
   X and Y each independently represent an oxygen atom or an imino group (-NH-); and
   hydrogen atoms in the groups respectively represented by Ar¹, Ar², and Ar³ are each independently optionally replaced with a halogen atom, an alkyl group, or an aryl group:

      (4) -Ar⁴-Z-Ar⁵-
   wherein Ar⁴ and Ar⁵ each independently represent a phenylene group or a naphthylene group; and
   Z represents an oxygen atom, a sulfur atom, a carbonyl group, a sulfonyl group, or an alkylidene group.
[9] The liquid crystal polyester composition according to any one of [1] to [8], wherein the limiting viscosity of the high-molecular-weight polyethylene is 11 dL/g or more and 16 dL/g or less, preferably 12 dL/g or more and 15 dL/g or less, the volume median diameter (d50) of the high-molecular-weight polyethylene is 5 µm or more and less than 65 µm, preferably 5 µm or more and 50 µm or less, more preferably 5 µm or more and 40 µm or less, and the content of the high-molecular-weight polyethylene is 0.2 parts by mass or more and 1.0 parts by mass or less, preferably 0.3 parts by mass or more and 0.9 parts by mass or less, more preferably 0.4 parts by mass or more and 0.8 parts by mass or less per 100 parts by mass of the liquid crystal polyester.
[10] The liquid crystal polyester composition according to any one of [4] to [9], wherein the content of the fibrous filler is preferably 40 parts by mass or more and 200 parts by mass or less, more preferably 50 parts by mass or more and 150 parts by mass or less per 100 parts by mass of the liquid crystal polyester.
[11] The liquid crystal polyester composition according to any one of [6] to [10], wherein a content of the metal salt of a fatty acid having 12 or more carbon atoms is 0.02 parts by mass or more and 0.15 parts by mass or less, preferably 0.02 parts by mass or more and 0.12 parts by mass or less, more preferably 0.02 parts by mass or more and 0.09 parts by mass or less per 100 parts by mass of the liquid crystal polyester.
[12] A molded body comprising the liquid crystal polyester composition according to any one of [1] to [11].

### Effects of Invention

According to the present invention, it is possible to provide a liquid crystal polyester composition having higher mold releasability that indicates the ease of removing a molded body from a mold and a molded body comprising the same.

### Brief Description of Drawings

[Figure 1] Figure 1 is a perspective view of an example of a molded body comprising a liquid crystal polyester composition according to an embodiment of the present invention.
[Figure 2A] Figure 2A is a cross-sectional view of a mold used in the Examples.
[Figure 2B] Figure 2B is a photograph of a first plate in the mold used in the Examples.

### Embodiments for Carrying out Invention

### (Liquid crystal polyester composition)

A liquid crystal polyester composition according to an embodiment of the present invention contains a liquid crystal polyester and a high-molecular-weight polyethylene. The high-molecular-weight polyethylene has a limiting viscosity of 10 dL/g or more and 18 dL/g or less. The high-molecular-weight polyethylene has a volume median diameter (d50) of 65 µm or less. The content of the high-molecular-weight polyethylene is 0.1 parts by mass or more and 1.2 parts by mass or less per 100 parts by mass of the liquid crystal polyester.

### <Liquid crystal polyester>

The liquid crystal polyester used in the present embodiment is a polyester that is liquid crystalline in a melt state. The liquid crystal polyester that melts at temperatures of 400°C or less is preferable.

The flow start temperature of the liquid crystal polyester is preferably 260°C or higher, more preferably 260°C or higher and 400°C or lower, even more preferably 260°C or higher and 380°C or lower.

The flow start temperature of the liquid crystal polyester is herein also called a flow temperature or a fluidity temperature and is a guide of the molecular weight of the liquid crystal polyester (see "Liquid crystal polymer -Synthesis, Molding, and Application-" edited by Naoyuki Koide, CMC CORPORATION, Jun. 5, 1987, p.95).

The flow start temperature refers to a temperature at which the viscosity of the liquid crystal polyester is 4800 Pa·s (48000 poise) when the liquid crystal polyester is melted at a temperature rise rate of 4°C/min under a load of 9.8 MPa (100 kg/cm²) and extruded through a nozzle having an inner diameter of 1 mm and a length of 10 mm with the use of a flow tester.

It is preferable that the liquid crystal polyester is a wholly aromatic liquid crystal polyester obtained using only aromatic compounds as the raw material monomers.

The liquid crystal polyester preferably has a repeating unit represented by the following formula (1) (hereinafter referred to as "repeating unit (1)"). The liquid crystal polyester more preferably has the repeating unit (1), a repeating unit represented by the following formula (2) (hereinafter referred to as "repeating unit (2)"), and a repeating unit represented by the following formula (3) (hereinafter referred to as "repeating unit (3)").

The liquid crystal polyester may have two or more types of each of the repeating units (1) to (3) which are independent of each other.

(1) -O-Ar¹-CO-

(2) -CO-Ar²-CO-

(3) -X-Ar³-Y-

wherein Ar¹ represents a phenylene group, a naphthylene group, or a biphenylylene group, Ar² and Ar³ each independently represent a phenylene group, a naphthylene group, a biphenylylene group, or a group represented by the following formula (4), X and Y each independently represent an oxygen atom or an imino group (-NH-), and hydrogen atoms in the groups respectively represented by Ar¹, Ar², and Ar³ are each independently optionally replaced with a halogen atom, an alkyl group, or an aryl group:

(4) -Ar⁴-Z-Ar⁵-

wherein Ar⁴ and Ar⁵ each independently represent a phenylene group or a naphthylene group and Z represents an oxygen atom, a sulfur atom, a carbonyl group, a sulfonyl group, or an alkylidene group.

Examples of the halogen atom include a fluorine atom, a chlorine atom, a bromine atom, and an iodine atom.

Examples of the alkyl group include a methyl group, an ethyl group, a n-propyl group, an isopropyl group, a n-butyl group, an isobutyl group, a s-butyl group, a t-butyl group, a n-hexyl group, a 2-ethylhexyl group, a n-octyl group, and a n-decyl group, and the number of carbon atoms thereof is preferably 1 to 10.

Examples of the aryl group include a phenyl group, an o-tolyl group, an m-tolyl group, a p-tolyl group, a 1-naphthyl group, and a 2-naphthyl group, and the number of carbon atoms thereof is preferably 6 to 20.

When the hydrogen atom is replaced with such a group, the numbers of the groups in the respective groups represented by Ar¹, Ar², and Ar³ are each independently preferably 2 or less, more preferably 1 or less.

Examples of the alkylidene group include a methylene group, an ethylidene group, an isopropylidene group, an n-butylidene group, and a 2-ethylhexylidene group, and the number of carbon atoms thereof is preferably 1 to 10.

The repeating unit (1) is a repeating unit derived from a predetermined aromatic hydroxycarboxylic acid. The repeating unit (1) is preferably one in which Ar¹ is a 1,4-phenylene group (a repeating unit derived from p-hydroxybenzoic acid) or one in which Ar¹ is a 2,6-naphthylene group (a repeating unit derived from 6-hydroxy-2-naphthoic acid), more preferably one in which Ar¹ is a 1,4-phenylene group.

The term "derived from" herein means that when the raw material monomer is polymerized, the chemical structure of a functional group that contributes to the polymerization changes but other structural changes do not occur.

The repeating unit (2) is a repeating unit derived from a predetermined aromatic dicarboxylic acid. The repeating unit (2) is preferably one in which Ar² is a 1,4-phenylene group (a repeating unit derived from terephthalic acid), one in which Ar² is a 1,3-phenylene group (a repeating unit derived from isophthalic acid), one in which Ar² is a 2,6-naphthylene group (a repeating unit derived from 2,6-naphthalenedicarboxylic acid), or one in which Ar² is a diphenylether-4,4'-diyl group (a repeating unit derived from diphenylether-4,4'-dicarboxylic acid), more preferably one in which Ar² is a 1,4-phenylene group and/or one in which Ar² is a 1,3-phenylene group. The liquid crystal polyester preferably contains a repeating unit (2) in which Ar² is a 1,4-phenylene group and a repeating unit (2) in which Ar² is a 1,3-phenylene group.

The repeating unit (3) is a repeating unit derived from a predetermined aromatic diol, aromatic hydroxylamine, or aromatic diamine. The repeating unit (3) is preferably one in which Ar³ is a 1,4-phenylene group (a repeating unit derived from hydroquinone, p-aminophenol, or p-phenylenediamine) or one in which Ar³ is a 4,4'-biphenylylene group (a repeating unit derived from 4,4'-dihydroxybiphenyl, 4-amino-4'-hydroxybiphenyl, or 4,4'-diaminobiphenyl), more preferably one in which Ar³ is a 4,4'-biphenylylene group.

The content of the repeating unit (1) is preferably 30 mol% or more, more preferably 30 mol% or more and 80 mol% or less, even more preferably 40 mol% or more and 70 mol% or less, particularly preferably 45 mol% or more and 65 mol% or less relative to the total amount of all the repeating units.

When the content of the repeating unit (1) is higher, melt flowability, heat resistance, strength, and stiffness are more likely to improve. However, if the content is excessively high, melt temperature and melt viscosity are more likely to increase, and therefore the temperature required for molding is more likely to increase.

The total amount of all the repeating units herein means a value determined by dividing the mass of each of the repeating units constituting the liquid crystal polyester by the formula weight of each of the repeating units to determine an amount (mol) equivalent to the amount of substance of each of the repeating units and summing the amounts.

The content of the repeating unit (2) is preferably 35 mol% or less, more preferably 10 mol% or more and 35 mol% or less, even more preferably 15 mol% or more and 30 mol% or less, particularly preferably 17.5 mol% or more and 27.5 mol% or less relative to the total amount of all the repeating units.

The content of the repeating unit (3) is preferably 35 mol% or less, more preferably 10 mol% or more and 35 mol% or less, even more preferably 15 mol% or more and 30 mol% or less, particularly preferably 17.5 mol% or more and 27.5 mol% or less relative to the total amount of all the repeating units.

The ratio between the content of the repeating unit (2) and the content of the repeating unit (3) is represented by [content of repeating unit (2)]/[content of repeating unit (3)] (mol/mol) and is preferably 0.9/1 to 1/0.9, more preferably 0.95/1 to 1/0.95, even more preferably 0.98/1 to 1/0.98.

The liquid crystal polyester may have a repeating unit other than the repeating units (1) to (3), and the content of such a repeating unit is preferably 10 mol% or less, more preferably 5 mol% or less relative to the total amount of all the repeating units.

The liquid crystal polyester preferably has, as the repeating unit (3), one in which X and Y are each an oxygen atom so that melt viscosity is likely to be lowered. The liquid crystal polyester more preferably has, as the repeating unit (3), one in which X and Y are each an oxygen atom only.

The liquid crystal polymer may be produced by melt polymerization of a raw material monomer corresponding to a repeating unit constituting it and solid state polymerization of the obtained polymer (hereinafter sometimes referred to as "prepolymer"). The melt polymerization may be performed in the presence of a catalyst.

In the present embodiment, one type of liquid crystal polyester may be used singly, or two or more types of liquid crystal polyesters may be used in combination.

The content of the liquid crystal polyester in the liquid crystal polyester composition of the present embodiment is preferably 30 mass% or more, more preferably 35 mass% or more, even more preferably 40 mass% or more relative to 100 mass% of the entire amount of the liquid crystal polyester composition.

Further, the content of the liquid crystal polyester in the liquid crystal polyester composition of the present embodiment is preferably 80 mass% or less, more preferably 70 mass% or less, even more preferably 60 mass% or less relative to 100 mass% of the entire amount of the liquid crystal polyester composition.

For example, the content of the liquid crystal polyester in the liquid crystal polyester composition of the present embodiment is preferably 30 mass% or more and 80 mass% or less, more preferably 35 mass% or more and 70 mass% or less, even more preferably 40 mass% or more and 60 mass% or less relative to 100 mass% of the entire amount of the liquid crystal polyester composition.

### <High-molecular-weight polyethylene>

The limiting viscosity of the high-molecular-weight polyethylene used in the present embodiment is 10 dL/g or more and 18 dL/g or less, preferably 11 dL/g or more and 16 dL/g or less, more preferably 12 dL/g or more and 15 dL/g or less.

Such a high-molecular-weight polyethylene can be a commercially-available product. Examples of such a commercially-available product include various grades of MIPELON (trademark) manufactured by Mitsui Chemicals, Inc.

The limiting viscosity of the high-molecular-weight polyethylene can be measured in the following manner.

The high-molecular-weight polyethylene is diluted with decalin to obtain a plurality of diluted solutions different in high-molecular-weight polyethylene concentration. The flow time of each diluted solution is measured with a capillary viscometer to determine the reduced viscosity. The relationship between the high-molecular-weight polyethylene concentration and the reduced viscosity is plotted to perform extrapolation, and the intercept of linear approximation is defined as a limiting viscosity (dL/g).

The molecular weight of the high-molecular-weight polyethylene used in the present embodiment is preferably 1,000,000 or more and 3,500,000 or less, more preferably 1,250,000 or more and 3,000,000 or less.

The molecular weight of the high-molecular-weight polyethylene can be determined by calculating a viscosity average molecular weight from the above-described limiting viscosity on the basis of the following formula (*). Viscosity-average molecular weight Mv = 5.37 × 104 × [η]1.37 ... (*) [η]: limiting viscosity (dL/g), solvent: decalin, measurement temperature: 135°C

The volume median diameter (d50) of the high-molecular-weight polyethylene refers to a particle diameter at a cumulative value of 50% in a volume-based particle size distribution determined by a Coulter counter method.

The volume median diameter (d50) of the high-molecular-weight polyethylene used in the present embodiment is 65 µm or less, preferably 5 µm or more and less than 65 µm, more preferably 5 µm or more and 50 µm or less, even more preferably 5 µm or more and 40 µm or less.

The volume median diameter (d50) of the high-molecular-weight polyethylene may be 5 µm or more and 63 µm or less.

The content of the high-molecular-weight polyethylene in the liquid crystal polyester composition of the present embodiment is 0.1 part by mass or more and 1.2 parts by mass or less, preferably 0.1 part by mass or more and less than 1.2 parts by mass, more preferably 0.2 part by mass or more and 1.0 part by mass or less, even more preferably 0.3 part by mass or more and 0.9 part by mass or less, particularly preferably 0.4 part by mass or more and 0.8 part by mass or less per 100 parts by mass of the liquid crystal polyester.

The total content of the high-molecular-weight polyethylene and the liquid crystal polyester may be 20 parts by mass or more and 100 parts by mass or less or 30 parts by mass or more and 90 parts by mass or less per 100 parts by mass of the liquid crystal polyester composition.

### <Other components>

As necessary, the liquid crystal polyester composition of the present embodiment may contain, in addition to the liquid crystal polyester and the high-molecular-weight polyethylene, one or more of a fibrous filler, a metal salt of a fatty acid, a resin other than the liquid crystal polyester, and an additive other than these.

### <<Fibrous filler>>

The liquid crystal polyester composition of the present embodiment preferably further contains a fibrous filler. When a fibrous filler is further contained, a resulting molded body has higher strength typified by tensile strength, flexural strength, or impact strength.

The fibrous filler may be a fibrous inorganic filler or a fibrous organic filler.

From the viewpoint of imparting strength to a molded body and the viewpoint of availability, the fibrous filler is preferably glass fiber. The glass fiber is preferably E-glass.

When a fibrous filler is used in the present embodiment, one type of fibrous filler may be used singly or two or more types of fibrous fillers may be used in combination.

The content of the fibrous filler in the liquid crystal polyester composition of the present embodiment is preferably 20 parts by mass or more, more preferably 40 parts by mass or more, even more preferably 50 parts by mass or more per 100 parts by mass of the liquid crystal polyester. Further, the content of the fibrous filler is preferably 250 parts by mass or less, more preferably 200 parts by mass or less, even more preferably 150 parts by mass or less per 100 parts by mass of the liquid crystal polyester.

The content of the fibrous filler may be 165 parts by mass or less or 175 parts by mass or less per 100 parts by mass of the liquid crystal polyester.

The content of the fibrous filler in the liquid crystal polyester composition of the present embodiment is preferably 20 parts by mass or more and 250 parts by mass or less, more preferably 40 parts by mass or more and 200 parts by mass or less, even more preferably 50 parts by mass or more and 150 parts by mass or less per 100 parts by mass of the liquid crystal polyester.

### <<Metal salt of fatty acid>>

The liquid crystal polyester composition of the present embodiment preferably further contains a metal salt of a fatty acid. When a metal salt of a fatty acid is further contained, metering time during molding is stabilized and the variation of metering time is reduced. Further, average metering time during molding can be shortened. This makes it possible to reduce breakage of the fibrous filler contained in resin pellets during molding, thereby improving the strength of a molded body.

An example of the metal salt of a fatty acid used in the present embodiment is a metal salt of a fatty acid having 12 or more carbon atoms.

The fatty acid preferably has 12 or more and 28 or less carbon atoms and more preferably has 12 or more and 18 or less carbon atoms.

Specific examples of the metal salt of a fatty acid include lithium laurate, calcium laurate, barium laurate, lithium stearate, barium stearate, sodium stearate, potassium stearate, calcium stearate, aluminum stearate, magnesium behenate, calcium behenate, barium behenate, etc.

These metal salts of a fatty acid may be used singly or in combination of two or more of them.

The content of the metal salt of a fatty acid in the liquid crystal polyester composition of the present embodiment is preferably 0.02 parts by mass or more and 0.15 parts by mass or less, more preferably 0.02 parts by mass or more and 0.12 parts by mass or less, even more preferably 0.02 parts by mass or more and 0.09 parts by mass or less per 100 parts by mass of the liquid crystal polyester.

### <<Resin other than liquid crystal polyester>>

Examples of the resin other than the liquid crystal polyester include thermoplastic resins other than the liquid crystal polyester resin, such as polypropylene, polyamide, polyester other than the liquid crystal polyester resin, polysulfone, polyphenylene sulfide, polyether ketone, polycarbonate, polyphenylene ether, and polyether imide; and thermosetting resins such as a phenol resin, an epoxy resin, a polyimide resin, and a cyanate resin.

Examples of another additive include a filler other than the above fibrous filler, a metering stabilizer other than the above metal salt of a fatty acid, a mold-releasing agent other than the above high-molecular-weight polyethylene, an antioxidant, a heat stabilizer, an ultraviolet absorber, an antistatic agent, a surfactant, a flame retarder, a colorant, etc.

The shape of the liquid crystal polyester composition of the present embodiment is not particularly limited and may include forms such as powder or pellets.

From the viewpoint of stability of metering time during molding and the viewpoint of improving mechanical strength of a molded body, a composition containing the liquid crystal polyester, the high-molecular-weight polyethylene, the fibrous filler, and the metal salt of a fatty acid is suitable as the liquid crystal polyester composition of the present embodiment. Such a suitable composition is particularly preferably used as, for example, a pellet mixture from the viewpoint of controllability of the variation of fiber length and the viewpoint of maintaining a long fiber length in a molded part.

Particularly, when the high-molecular-weight polyethylene contained in the liquid crystal polyester composition of the present embodiment has a volume median diameter (d50) of 65 µm or less, it is effective for mold releasability during molding.

In the case of the liquid crystal polyester composition of the present embodiment, by controlling the particle diameter of the high-molecular-weight polyethylene, the content of the high-molecular-weight polyethylene, and/or the limiting viscosity of the high-molecular-weight polyethylene, it is possible to obtain, in addition to the effect of improving mold releasability, the effect of reducing average metering time during molding and the effect of improving the strength of a resulting molded body typified by tensile strength, flexural strength, or impact strength. Further, as for impact strength, a standard deviation indicating the variation of strength is also reduced.

### (Molded body)

A molded body according to the present embodiment contains the above-described liquid crystal polyester composition according to one embodiment of the present invention.

One embodiment of such a molded body can be produced by a publicly-known molding method such as injection molding using the above-described liquid crystal polyester composition of the embodiment.

The molded body of the present embodiment is applicable to various purposes of use to which liquid crystal polyester is generally applicable. Among them, the molded body of the present embodiment is particularly suitable for use in the field of automobiles.

Examples of the purpose of use in the field of automobiles include injection molded bodies for interior materials and exterior materials of automobiles.

The molded body of the present embodiment is used as, for example, a shock-absorbing member in a crush box attached to a vehicle.

Hereinbelow, the embodiment will be described with reference to the respective drawings. For ease of reference, the dimensions, the ratios and the like of each component in all the drawings differ from the actual dimensions.

A molded body 500 has an injection-molded part 530 using the liquid crystal polyester composition as a molding material. The injection-molded part 530 includes a main body 510 and a flange 520 integrally molded with the main body 510.

The main body 510 has a honeycomb structure in which a plurality of tubular cells 512 projecting from the flange 520 are arranged without any gaps. The honeycomb structure may be a structure in which tubular cells having a hexagonal column shape are arranged without any gaps. The tubular cell 512 is formed to have a tubular shape whose flange 520-side end is closed and whose end on the opposite side from the flange 520 is opened. The tubular cell 512 has a height of, for example, 20 to 200 mm. A cell wall 514 has a thickness of, for example, 0.5 to 5 mm.

The molded body 500 is made of resin and therefore has a reduced weight. In addition, the molded body 500 has a honeycomb structure and therefore has improved shock energy absorption performance.

The molded body 500 has a complicated shape and a large contact area with elongated core pins and is therefore difficult to be removed from a mold. Specifically, the following problems may occur: the molded body cannot be removed from a mold, the number of times of pushing ejector pins increases, the flange 520 is broken when the molded body is removed from a mold, the dents of ejector pins remain on the flange 520, etc.

The liquid crystal polyester composition of the present embodiment has high mold releasability that indicates the ease of removing a molded body from a mold even when a molded body having a complicated shape, such as the molded body 500, is produced by injection molding.

The present invention has the following aspects.

<13> A shock-absorbing member comprising an injection-molded part produced using the liquid crystal polyester composition according to any one of <1> to <11> above, wherein
the injection-molded part includes a main body having a honeycomb structure filled with a plurality of tubular cells.

<14> The shock-absorbing member according to <13>, wherein a mass ratio between a content of the liquid crystal polyester and a content of a fibrous filler in the injection-molded part is 25 to 60 parts by mass of the fibrous filler relative to 40 to 75 parts by mass of the liquid crystal polyester, preferably 25 to 55 parts by mass of the fibrous filler relative to 45 to 75 parts by mass of the liquid crystal polyester, more preferably 30 to 55 parts by mass of the fibrous filler relative to 45 to 70 parts by mass of the liquid crystal polyester, even more preferably 30 to 50 parts by mass of the fibrous filler relative to 50 to 70 parts by mass of the liquid crystal polyester.

### Examples

Hereinbelow, the present invention will be described with reference to examples, but the present invention is not limited to these examples.

### [Measurement of flow start temperature of liquid crystal polyester pellets]

Using a flow tester ("CFT-500EX" manufactured by SHIMADZU CORPORATION), a cylinder equipped with a die having a nozzle with an inner diameter of 1 mm and a length of 10 mm was filled with about 2 g of a sample, the sample was melted and extruded through the nozzle at a temperature rise rate of 4°C/min under a load of 9.8 MPa, and a temperature at which the viscosity was 4800 Pa·s was measured as a flow start temperature.

### [Measurement of limiting viscosity of high-molecular-weight polyethylene]

A high-molecular-weight polyethylene was diluted with decalin to prepare a plurality of diluted solutions different in high-molecular-weight polyethylene concentration. The flow time of each of the diluted solutions was measured with a capillary viscometer at a measurement temperature of 135°C to determine a reduced viscosity. Then, the relationship between the high-molecular-weight polyethylene concentration and the reduced viscosity was plotted to perform extrapolation, and the intercept of linear approximation was measured as a limiting viscosity (dL/g).

### [Measurement of volume median diameter (d50) of high-molecular-weight polyethylene]

The volume median diameter (d50) of a high-molecular-weight polyethylene was measured in the following manner.

A high-molecular-weight polyethylene was mixed with ISOTONII and Tween20 to prepare a sample. The volume median diameter (d50) of the sample was determined by a Coulter counter method. ISOTONII is an electrolyte solution for measurement manufactured by Beckman Coulter. Tween20 is a surfactant.

Apparatus used and measurement conditions:
Multisizer 4 (manufactured by Beckman Coulter) was used as a Coulter counter.
Aperture 100 µm (Measurement range from 2 µm to 60 µm)
Aperture 280 µm (Measurement range from 5.6 µm to 168 µm)
Aperture 400 µm (Measurement range from 9.7 µm to 240 µm)

### <Preparation of resin material>

As liquid crystal polyesters, a powdery liquid crystal polyester (LCP1) and a powdery liquid crystal polyester (LCP2) were each produced.

Further, neat pellets (1) consisting only of a liquid crystal polyester were produced.

Further, resin pellets (1) with glass fibers impregnated into a liquid crystal polyester were produced.

### <<Production of powdery liquid crystal polyester (LCP1)>>

In a reactor equipped with a stirrer, a torque meter, a nitrogen gas introduction tube, a thermometer, and a reflux condenser, p-hydroxybenzoic acid (994.5 g, 7.2 mol), 4,4'-dihydroxybiphenyl (446.9 g, 2.4 mol), terephthalic acid (299.0 g, 1.8 mol), isophthalic acid (99.7 g, 0.6 mol), acetic anhydride (1347.6 g, 13.2 mol), and 0.9 g of 1-methylimidazole were placed, and the air inside the reactor was sufficiently replaced with nitrogen gas.

Then, the temperature in the reactor was increased from room temperature to 150°C over 30 minutes under a nitrogen gas stream, and the resultant was held at 150°C to reflux for 1 hour.

Then, 1-methylimidazole (0.9 g) was added to the reactor, and the temperature was increased from 150°C to 320°C over 2 hours and 50 minutes while by-product acetic acid and unreacted acetic anhydride were distilled off. The content was taken out at the end of the reaction at which an increase in torque was recognized and was cooled to room temperature to obtain a solid material.

The obtained solid material was pulverized by a pulverizer until a particle diameter of about 0.1 to 1 mm was achieved. Then, the resultant was subjected to solid state polymerization under a nitrogen atmosphere by increasing the temperature from room temperature to 250°C over 1 hour, increasing the temperature from 250°C to 285°C over 5 hours, and maintaining the temperature at 285°C for 3 hours.

After the solid state polymerization, the resultant was cooled to obtain a powdery liquid crystal polyester (LCP1).

The thus obtained liquid crystal polyester had 60 mol% of a repeating unit (1) in which Ar¹ was a 1,4-phenylene group, 15 mol% of a repeating unit (2) in which Ar² was a 1,4-phenylene group, 5 mol% of a repeating unit (2) in which Ar² was a 1,3-phenylene group, and 20 mol% of a repeating unit (3) in which Ar³ was a 4,4'-biphenylylene group relative to the total amount of all the repeating units, and the flow start temperature of the liquid crystal polyester was 327°C.

### <<Production of powdery liquid crystal polyester (LCP2)>>

In a reactor equipped with a stirrer, a torque meter, a nitrogen gas introduction tube, a thermometer, and a reflux condenser, p-hydroxybenzoic acid (994.5 g, 7.2 mol), 4,4'-dihydroxybiphenyl (446.9 g, 2.4 mol), terephthalic acid (239.2 g, 1.44 mol), isophthalic acid (159.5 g, 0.96 mol), and acetic anhydride (1347.6 g, 13.2 mol) were charged, and 1-methylimidazole (0.9 g) was added thereto. The air inside the reactor was sufficiently replaced with nitrogen gas.

Then, the temperature in the reactor was increased from room temperature to 150°C over 30 minutes under a nitrogen gas stream, and the resultant was held at 150°C to reflux for 1 hour.

Then, 1-methylimidazole (0.9 g) was added to the reactor, and the temperature was increased from 150°C to 320°C over 2 hours and 50 minutes while by-product acetic acid and unreacted acetic anhydride were distilled off. The content was taken out at the end of the reaction at which an increase in torque was recognized and was cooled to room temperature to obtain a solid material.

The obtained solid material was pulverized by a pulverizer until a particle diameter of about 0.1 to 1 mm was achieved. Then, the resultant was subjected to solid state polymerization under a nitrogen atmosphere by increasing the temperature from room temperature to 220°C over 1 hour, increasing the temperature from 220°C to 240°C over 0.5 hours, and maintaining the temperature at 240°C for 10 hours.

After the solid state polymerization, the resultant was cooled to obtain a powdery liquid crystal polyester (LCP2).

The thus obtained liquid crystal polyester had 60 mol% of a repeating unit (1) in which Ar¹ was a 1,4-phenylene group, 12 mol% of a repeating unit (2) in which Ar² was a 1,4-phenylene group, 8 mol% of a repeating unit (2) in which Ar² was a 1,3-phenylene group, and 20 mol% of a repeating unit (3) in which Ar³ was a 4,4'-biphenylylene group relative to the total amount of all the repeating units, and the flow start temperature of the liquid crystal polyester was 291°C.

### <<Production of neat pellets (1)>>

The obtained powdery liquid crystal polyester (LCP2) was granulated by a twin screw extruder (PMT47, manufactured by IKG Corporation) at a cylinder temperature of 290°C to produce neat pellets (1). The flow start temperature of the obtained neat pellets (1) was 284°C.

### <<Production of resin pellets (1)>>

Resin pellets (1) were produced in the following manner.

As an extruder, a GTS-40 type extruder (manufactured by Research Laboratory of Plastics Technology Co., Ltd.) was used. As a belt-type haul-off machine, EBD-1500A (manufactured by AIMEX CO., LTD.) was used. As a fibrous filler, glass fiber described below was used.

### [Glass fiber]

GF1: Glass fiber roving (E-glass, fiber diameter 10 µm, fineness 1400 g/1000 m, manufactured by Nippon Electric Glass Co., Ltd.)

As a powdery liquid crystal polyester, LCP1 and LCP2 described above were used.

A resin structure was obtained which contained 165 parts by mass of GF1 per 100 parts by mass of the total of LCP1 and LCP2 (75 parts by mass of LCP 1 and 25 parts by mass of LCP2). Specifically, the resin structure was obtained by supplying LCP1 and LCP 2 in a melt state from the extruder and impregnating GF1 therewith.

The obtained resin structure was hauled off by the belt-type haul-off machine to obtain a strand, and the strand was sent to a pelletizer and cut in the longitudinal direction thereof to a predetermined length (12 mm) to obtain cylindrical resin pellets (1).

### <Production of liquid crystal polyester composition>

### (Comparative Example 1)

The resin pellets (1), the neat pellets (1), and a metal salt of a fatty acid (1) were mixed in their respective proportions shown in Table 1 to produce a liquid crystal polyester composition of Comparative Example 1 under molding conditions (A) described later.

The metal salt of a fatty acid (1) was externally added in an amount of 0.06 parts by mass per 100 parts by mass of the total of LCP1 and LCP2.

### (Examples 1 to 5, Comparative Examples 2 and 3)

The resin pellets (1), the neat pellets (1), high-molecular-weight polyethylenes (1) to (5), and a metal salt of a fatty acid (1) were mixed in their respective proportions shown in Table 1 to produce a liquid crystal polyester composition of each of Examples 1 to 5 and Comparative Examples 2 and 3 under molding conditions (A) described later.

The amount of the high-molecular-weight polyethylenes (1) to (5) externally added per 100 parts by mass of the total of LCP1 and LCP2 in Example 1 was 0.1 parts by mass; that in Example 3 was 1.2 parts by mass; that in each of Examples 2, 4 and 5 was 0.6 parts by mass; and that in each of Comparative Examples 2 and 3 was 0.6 parts by mass.

The metal salt of a fatty acid (1) was externally added in an amount of 0.06 parts by mass per 100 parts by mass of the total of LCP1 and LCP2.

The high-molecular-weight polyethylenes used and the metal salt of a fatty acid used were as follows.

High-molecular-weight polyethylene (1): limiting viscosity 14 dL/g, volume median diameter (d50) 32 µm, MIPELON (trademark) XM-221U manufactured by Mitsui Chemicals, Inc.

High-molecular-weight polyethylene (2): limiting viscosity 13 dL/g, volume median diameter (d50) 11 µm, MIPELON (trademark) PM-200 manufactured by Mitsui Chemicals, Inc.

High-molecular-weight polyethylene (3): limiting viscosity 14 dL/g, volume median diameter (d50) 64 µm, MIPELON (trademark) XM-330 manufactured by Mitsui Chemicals, Inc. High-molecular-weight polyethylene (4): limiting viscosity 5 dL/g, volume median diameter (d50) 132 µm, HI-ZEX MILLION (trademark) 030S manufactured by Mitsui Chemicals, Inc.

High-molecular-weight polyethylene (5): limiting viscosity 30 dL/g, volume median diameter (d50) 171 µm, HI-ZEX MILLION (trademark) 630M manufactured by Mitsui Chemicals, Inc.

Metal salt of fatty acid (1): calcium behenate, CS-7 manufactured by Nitto Chemical Industry Co., Ltd.

**[Table 1]**

| **Liquid crystal polyester composition** | | | | **Comparative Example 1** | **Example 1** | **Example 2** | **Example 3** | **Example 4** | **Example 5** | **Comparative Example 2** | **Comparative Example 3** |
|---|---|---|---|---|---|---|---|---|---|---|---|
| **Resin material** | **Resin pellets (1)** | **LCP1** | **parts** | **75** | **75** | **75** | **75** | **75** | **75** | **75** | **75** |
| | | **LCP2** | **parts** | **25** | **25** | **25** | **25** | **25** | **25** | **25** | **25** |
| | | **GF1** | **parts** | **165** | **165** | **165** | **165** | **165** | **165** | **165** | **165** |
| | **Neat pellets(1)** | **LCP2** | **parts** | **65** | **65** | **65** | **65** | **65** | **65** | **65** | **65** |
| **High-molecular-weight polyethylene (1)** | | | **phr** | **-** | **0.1** | **0.6** | **1.2** | **-** | **-** | **-** | **-** |
| **High-molecular-weight polyethylene (2)** | | | **phr** | **-** | **-** | **-** | **-** | **0.6** | **-** | **-** | **-** |
| **High-molecular-weight polyethylene (3)** | | | **phr** | **-** | **-** | **-** | **-** | **-** | **0.6** | **-** | **-** |
| **High-molecular-weight polyethylene (4)** | | | **phr** | **-** | **-** | **-** | **-** | **-** | **-** | **0.6** | **-** |
| **High-molecular-weight polyethylene (5)** | | | **phr** | **-** | **-** | **-** | **-** | **-** | **-** | **-** | **0.6** |
| **Metal salt of a fatty acid (1)** | | | **phr** | **0.06** | **0.06** | **0.06** | **0.06** | **0.06** | **0.06** | **0.06** | **0.06** |

### <Production of molded body>

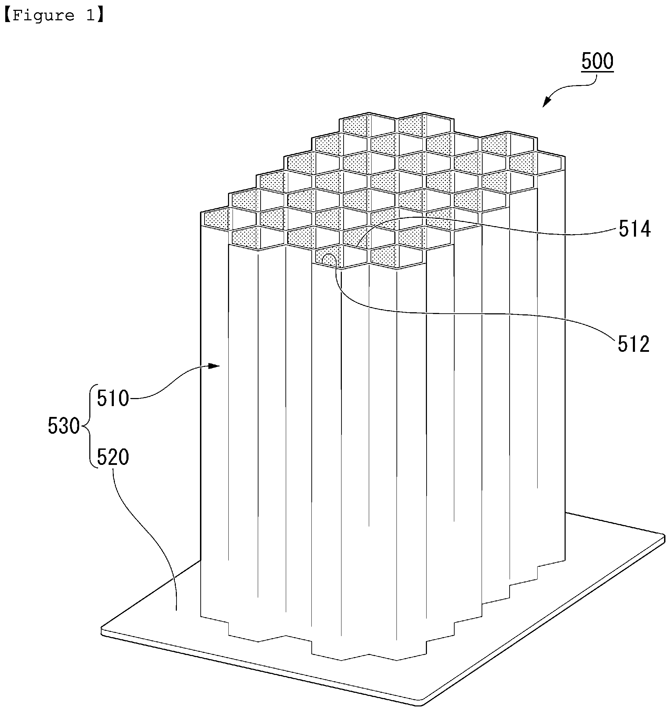

The liquid crystal polyester composition of each of the examples was subjected to injection molding process under molding conditions (A) described below to produce a shock-absorbing member, by molding an injection-molded part having the same form as the above-described molded body 500 shown in Figure 1 and including a main body having a honeycomb structure.

### [Molding conditions (A)]

Molding temperature: plasticization part 300°C, plunger part 360°C
Screw rotation speed 100 rpm, back pressure 1 MPa, injection speed 200 mm/s, mold temperature 70°C, holding pressure 30 MPa, pressure holding time 5 sec

The honeycomb structure of the main body was formed by molding to have 80 mm-height 32 tubular cells, and each of the tubular cells had, when viewed from above, an open end having an almost regular hexagonal shape whose radius of curvature at each vertex was 2 mm. In addition, in each of the tubular cells, the cell inner diameter at the open end was 13 mm, the cell inner diameter at the flange-side end was 12 mm, the cell wall thickness at the open end was 1 mm, the cell wall thickness at the flange-side end was 2 mm, and the thickness of the flange was 5 mm.

### [Evaluation of mold releasability]

Mold releasability indicating the ease of removing a molded body from a mold was evaluated through steps described below.

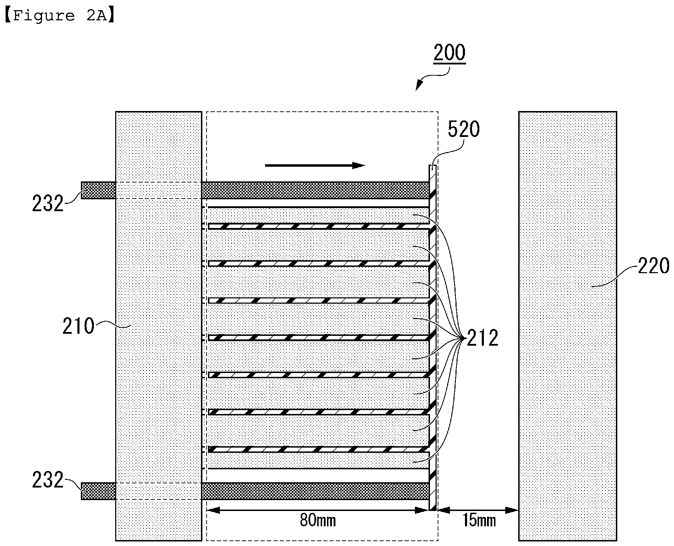

In Figure 2A, a mold 200 has a first plate 210, a second plate 220, and a total of 12 ejector pins 232.

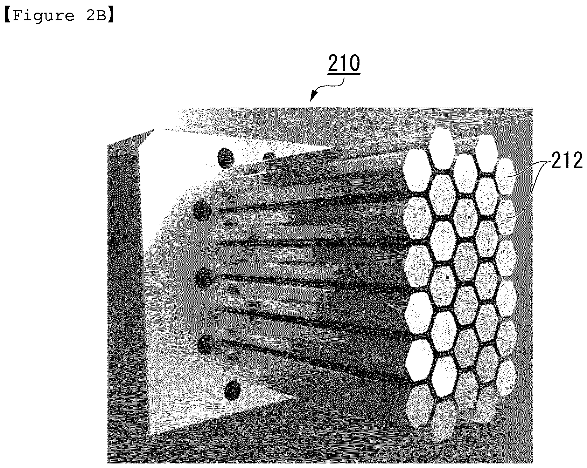

The first plate 210 has a plurality of core pins 212 arranged in a horizontal direction. The photograph of Figure 2B shows one form thereof. The ejector pins 232 are positioned around the outside of the core pins 212 and arranged in parallel with the core pins 212.

Step (1) When the molded body (shock-absorbing member) was removed from the mold 200, the mold was opened so that the distance between the first plate 210 and the second plate 220 was 15 mm or more.

Step (2) The operation of pushing the ejector pins 232 rightward (toward the second plate 220, in the direction of arrow) was performed under ejection conditions described below to push out the molded body from the first plate 210.

### Ejection conditions in one operation: ejection force 5.4 kN, ejection speed 5 mm/sec

Step (3) The number of times of the operation of pushing the ejector pins 232 (the number of times of pushing ejectors) was counted until the distance of the ejected molded body from the first plate 210 (ejection distance) reached 15 mm. The mold releasability was evaluated according to the following criteria using the number of times of pushing ejectors as an indicator. The results were shown in Table 2.

### Evaluation criteria of mold releasability

E (Excellent): The number of times of pushing ejectors was 1.

G (Good): The number of times of pushing ejectors was 2.

B (Bad): The number of times of pushing ejectors was 3 or the molded body could not be removed from the mold.

**[Table 2]**

| **Liquid crystal polyester composition** | | **Comparative Example 1** | **Example 1** | **Example 2** | **Example 3** | **Example 4** | **Example 5** | **Comparative Example 2** | **Comparative Example 3** |
|---|---|---|---|---|---|---|---|---|---|
| **Evaluation** | **Mold releasability** | **B** | **G** | **E** | **E** | **E** | **G** | **B** | **B** |

### <Production of molded bodies (2 mm-thick dumbbells)>

The liquid crystal polyester composition of each of the examples was subjected to injection molding process under molding conditions (B) described below to produce each test specimen.

Specifically, the liquid crystal polyester composition of each of the examples was charged into a hopper of an injection molding machine TR450EH3 (manufactured by Sodick Co., Ltd.) and molded under molding conditions (B) described below to prepare, as test specimens, multipurpose test specimens (type A1) (thickness 4 mm) in accordance with JIS K7139 except that the thickness was changed to 2 mm.

It should be noted that the gate was a film gate having a thickness of 2 mm from the upper side of the grip portion on one side of the multipurpose test specimen.

### [Molding conditions (B)]

Molding temperature: plasticization part 300°C, plunger part: 360°C
Screw rotation speed 100 rpm, back pressure 1 MPa, injection speed 20 mm/s, mold temperature 100°C, holding pressure 70 MPa, pressure holding time 5 sec

### [Measurement of average metering time]

In the production of molded bodies (2 mm-thick dumbbells), 15 multipurpose test specimens having a thickness of 2 mm were continuously molded, and the metering time during molding was measured for each of the 6th to 15th multipurpose test specimens. Then, the average metering time of a total of the 10 shots was calculated. The results were shown in Table 3.

### [Measurement of tensile strength]

The tensile strength (MPa) of each of the 2 mm-thick multipurpose test specimens produced above in <Production of molded bodies (2 mm-thick dumbbells)> was measured under an atmosphere of 23°C and a relative humidity of 50% in accordance with JIS K7161 (Plastics-Determination of tensile properties) and ISO527 except that the test speed was changed to 1 mm/min.

The measurement was performed using an Instron universal testing machine (manufactured by Instron, 68TM-50). The measurement was performed on 5 samples, and the average thereof was determined. The results were shown in Table 3.

### [Measurement of flexural strength]

A test specimen having a width of 10 mm, a length of 80 mm, and a thickness of 2 mm was cut out from the center of each of the 2 mm-thick multipurpose test specimens produced above in <Production of molded bodies (2 mm-thick dumbbells)>. The flexural strength (MPa) of the cut-put test specimen was measured under an atmosphere of 23°C and a relative humidity of 50% in accordance with JIS K7171 (Plastics-Determination of flexural properties) and ISO178 except that the test speed was changed to 1 mm/min and the distance between supporting points was changed to 32 mm.

The measurement was performed using an Instron universal testing machine (manufactured by Instron, 68TM-50). The measurement was performed on 5 samples, and the average thereof was determined. The results were shown in Table 3.

### [Measurement of impact strength and standard deviation thereof]

### · Charpy impact strength of notch-free test specimen

A test specimen having a width of 10 mm, a length of 80 mm, and a thickness of 2 mm was cut out from the center of each of the 2 mm-thick multipurpose test specimens produced above in <Production of molded bodies (2 mm-thick dumbbells)> to prepare a notch-free test specimen.

A Charpy impact test using a 4.0 J hammer was performed five times on the cut-out notch-free test specimens in accordance with ISO179-1 and JIS K7111-1 (Plastics-Determination of Charpy impact properties) to measure impact strength (kJ/m²) and the standard deviation thereof. The measurement was performed using a pendulum impact tester (manufactured by Instron, CEAST9050).

The Charpy impact strength of the notch-free test specimen was measured five times, and the average of the five measurements was used. The results were shown in Table 3.

### · Charpy impact strength of notched test specimen

The notch-free test specimen was subjected to notch processing so that a notch angle was 45° and a depth was 2 mm by a method based on ISO2818 and JIS K7144 to prepare a notched test specimen. The notch processing was performed using a notching tool (manufactured by Toyo Seiki Seisaku-sho, Ltd., Type A-4).

A Charpy impact test using a 4.0 J hammer was performed five times on the notched test specimens in accordance with ISO179-1 and JIS K7111-1 to measure impact strength (kJ/m²) and the standard deviation thereof. The measurement was performed using a pendulum impact tester (manufactured by Instron, CEAST9050).

The Charpy impact strength of the notched test specimen was measured five times, and the average of the five measurements was used. The results were shown in Table 3.

**[Table 3]**

| **Liquid crystal polyester composition** | | | | **Comparative Example 1** | **Example 1** | **Example 2** | **Example 3** | **Example 4** | **Example 5** | **Comparative Example 2** | **Comparative Example 3** |
|---|---|---|---|---|---|---|---|---|---|---|---|
| **Evaluation** | **Average metering time** | | **sec** | **6.0** | **6.2** | **6.3** | **7.5** | **6.4** | **7.6** | **8.0** | **7.3** |
| | **Tensile strength** | | **MPa** | **150** | **154** | **159** | **156** | **160** | **159** | **154** | **161** |
| | **Flexural strength** | | **MPa** | **289** | **276** | **275** | **263** | **281** | **286** | **283** | **264** |
| | **Notch-free test specimen** | **Impact strength** | **kJ/m²** | **113** | **131** | **126** | **127** | **128** | **137** | **117** | **113** |
| | | **Standard deviation** | **kJ/m²** | **0.08** | **0.12** | **0.10** | **0.16** | **0.02** | **0.08** | **0.08** | **0.11** |
| | **Notched test specimen** | **Impact strength** | **kJ/m²** | **105** | **123** | **117** | **119** | **100** | **120** | **107** | **101** |
| | | **Standard deviation** | **kJ/m²** | **0.12** | **0.15** | **0.12** | **0.21** | **0.08** | **0.19** | **0.17** | **0.25** |

### Reference Signs List

200 ... mold, 210 ... first plate, 212 ... core pin, 220 ... second plate, 232 ... ejector pin, 500 ... molded body, 510 ... main body, 512 ... tubular cell, 514 ... cell wall, 520 ... flange, 530 ... injection-molded part

## Claims

1. A liquid crystal polyester composition comprising a liquid crystal polyester and a high-molecular-weight polyethylene, wherein
the high-molecular-weight polyethylene has a limiting viscosity of 10 dL/g or more and 18 dL/g or less,
the high-molecular-weight polyethylene has a volume median diameter (d50) of 65 µm or less, and
a content of the high-molecular-weight polyethylene is 0.1 parts by mass or more and 1.2 parts by mass or less per 100 parts by mass of the liquid crystal polyester.

2. The liquid crystal polyester composition according to claim 1, further comprising a fibrous filler.

3. The liquid crystal polyester composition according to claim 2, wherein the fibrous filler is glass fiber.

4. The liquid crystal polyester composition according to claim 2, wherein a content of the fibrous filler is 20 parts by mass or more and 250 parts by mass or less per 100 parts by mass of the liquid crystal polyester.

5. The liquid crystal polyester composition according to claim 1, further comprising a metal salt of a fatty acid.

6. The liquid crystal polyester composition according to claim 1, wherein the liquid crystal polyester has a repeating unit represented by the following formula (1):
(1) -O-Ar¹-CO-
-wherein Ar¹ represents a phenylene group, a naphthylene group, or a biphenylylene group, and a hydrogen atom in the group represented by Ar¹ is optionally replaced with a halogen atom, an alkyl group, or an aryl group.

7. A molded body comprising the liquid crystal polyester composition according to any one of claims 1 to 6.

8. The molded body according to claim 7, which has a honeycomb structure.
